# EUROPEAN PATENT APPLICATION

(11) **EP 2 457 822 A1**
(43) Date of publication of application: **30.05.2012**
(21) Application number: 11191402.4
(22) Date of filing: 30.11.2011
(51) Int. Cl.: B64C 1/12, B64C 3/26, B64C 3/28, B64C 1/06

(54) **Interface arrangement between two components of an aircraft lifting surface using an intermediate part**

(30) Priority: 30.11.2010 ES 201031766
(71) Applicant: Airbus Operations S.L., 28906 Madrid (ES)
(72) Inventor: Outon Hernández, Ignacio, 28320 Pinto, Madrid (ES); Rodrigo Caballero, Nuria, 28039 Madrid (ES)
(74) Representative: Elzaburu Marquez, Alberto

(57) **Abstract**

Interface arrangement between a first component (11) and a second component (21) of an aircraft structure having an aerodynamic contour, such as a wing skin and a wing leading edge panel, both components being made of composite material, the first component (11) having a joggle so that it includes a first area (13) which surface (15) belongs to the aircraft aerodynamic contour and a second area (17) where the joint with the second component (21) takes place, the second component (21) having a surface (23) belonging to the aircraft aerodynamic contour, in which an intermediate part (31) made of a composite material or a plastic material and suitable shaped for maintaining the continuity of the aircraft aerodynamic contour in the interface area between said components (11, 13) as well as to fill the expected gap (25) between said components (11, 13), is joined to the first component (21).

## Description

### FIELD OF THE INVENTION

This invention refers to an interface arrangement between two components of an aircraft structure having an aerodynamic contour and, more in particular, to an interface arrangement for maintaining the continuity of the aerodynamic contour in the interface.

### BACKGROUND OF THE INVENTION

As is well known, weight is a fundamental aspect in the aeronautic industry and therefore there is a current trend to use composite materials instead of metallic materials for aircraft structures with an aerodynamic contour such as lifting surfaces and fuselages.

The composite materials that are most used in the aeronautical industry consist of fibers or fiber bundles embedded in a matrix of thermosetting or thermoplastic resin, as a preimpregnated or "prepreg" material. Their main advantages refer to:
- Their high specific strength with respect to metallic materials. It is the strength/weight equation.
- Their excellent behavior before fatigue loads.
- The possibilities of structural optimization due to the anisotropy of the material and the possibility of combining fibers with different orientations, allowing the design of the elements with different mechanical properties to be adjusted to the different needs in terms of applied loads.

The main structure for aircraft lifting surfaces consists of a leading edge, a torsion box, a trailing edge a root joint and a tip. The torsion box consists of several structural elements: upper and lower skins stiffened by stringers on one side; spars and ribs on the other side. Typically, the structural elements forming the torsion box are manufactured separately and are joined with the aid of complicated tooling to achieve the necessary tolerances, which are given by the aerodynamic, assembly and structural requirements.

The interface between those components whose outer surface belongs to the aircraft aerodynamic contour such as a wing skin an a leading edge panel in the case of a lifting surface shall be arranged to comply with the aerodynamic requirements in terms of continuity, smoothness and drag, in the interface area.

In the prior art is well known the use of aerodynamic smoothing sealants covered by a paint layer to seal the gaps involved in said interfaces. These sealants are typically uncured pastes suitable for application by extrusion gun or spatula. They can cure at low temperatures and have a good adhesion to common aircraft substrates. However, when the gaps have certain dimensions the application and maintenance of said sealants raise several problems such as cracking, loosening or even detachment. These problems arise more often when the components joined are composite parts because their joints usually involve bigger gaps than metallic interfaces.

This invention is focused on the solution of this problem.

### SUMMARY OF THE INVENTION

One objective of the present invention is to provide a smoother interface arrangement between components of an aircraft structure with an aerodynamic contour that assures the continuity of the aerodynamic contour in that interface area as well as an easy maintenance to fill the gap associated to the interface.

Another objective of the present invention is to provide an interface arrangement between components of an aircraft structure with an aerodynamic contour that assures the continuity of the aerodynamic contour in the interface area reducing significantly the amount of aerodynamic smoothing sealant applied to seal the gap associated to the interface.

In one aspect these and other objectives are met by an interface arrangement between a first component and a second component of an aircraft structure having an aerodynamic contour, both components being made of composite material, the first component having a joggle so that it includes a first area which surface belongs to the aircraft aerodynamic contour and a second area where the joint with the second component takes place, the second component having a surface belonging to the aircraft aerodynamic contour, in which an intermediate part suitable shaped for maintaining the continuity of the aircraft aerodynamic contour in the interface area between said components as well as to fill the expected gap between said components, is joined to the first component.

In a preferred embodiment the gap filled with said intermediate part has a width W comprised between 10-15 mm and a height H greater than 3 mm. Hereby it is achieved an interface arrangement applicable to many aircraft structures.

In another preferred embodiment said intermediate part is a wedge-shaped part. Hereby it is achieved an suitable shape for many interface arrangements between components of an aircraft structure with an aerodynamic contour.

In another preferred embodiment, an aerodynamic smoothing sealant is used to fill any remaining gap between said components. Hereby it is achieved an interface arrangement that allows a tolerance margin between the first component, with the intermediate part joined to it, and the second component to help the assembly.

In another preferred embodiment said intermediate part is made of a composite material. Hereby it is achieved an interface arrangement allowing a good superficial finishing in the interface.

In another preferred embodiment said intermediate part is made of a plastic material, preferably polyurethane. Hereby it is achieved an interface arrangement allowing an easy assembly of all the components.

In another aspect, the above-mentioned objectives are met, when the intermediate part is made of a composite material, by a procedure to carry out the aforementioned joint arrangement comprising steps of: a) join the intermediate part to the first component whether by co-curing or by co-bonding); b) join the second component to the first component; c) fill any remaining gap between said components with an aerodynamic smoothing sealant.

In another aspect, the above-mentioned objectives are met, when the intermediate part is made of a plastic material, by a procedure to carry out the aforementioned joint arrangement comprising steps of: a) bond the intermediate part to the first component in the Final Assembly Line; b) fill any remaining gap between said components with an aerodynamic smoothing sealant.

One particular field of application of the present invention is the interface between a skin and a leading edge panel or a trailing edge panel in an aircraft lifting surface such as a wing or an horizontal tail plane.

Another particular field of application of the present invention is the interface between circumferential sections of an aircraft fuselage.

Other characteristics and advantages of the present invention will be clear from the following detailed description of embodiments illustrative of its object in relation to the attached figures.

### BRIEF DESCRIPTION OF DRAWINGS

Figure 1 is a section side view of an interface arrangement between a wing skin and a wing leading edge panel showing a gap between their aerodynamic surfaces.
Figure 2 is a section side view of an wedge-shaped intermediate part made of composite material or plastic material which is used in an interface arrangement between a wing skin and a wing leading edge panel according to the present invention.
Figure 3 is a section side view of an interface arrangement between a wing skin and a wing leading edge panel according to the present invention.

### DETAILED DESCRIPTION OF THE INVENTION

A detailed description of the invention for an interface arrangement between a wing skin and a leading edge panel follows.

The main structure for aircraft lifting surfaces consists of a leading edge, a torsion box, a trailing edge, a root joint, and a tip. A torsion box structurally consists of spars, ribs and upper and lower skins with several stringers. The upper and lower skins are joined to the leading edge and the trailing edge panels forming the upper and lower wing aerodynamic contour.

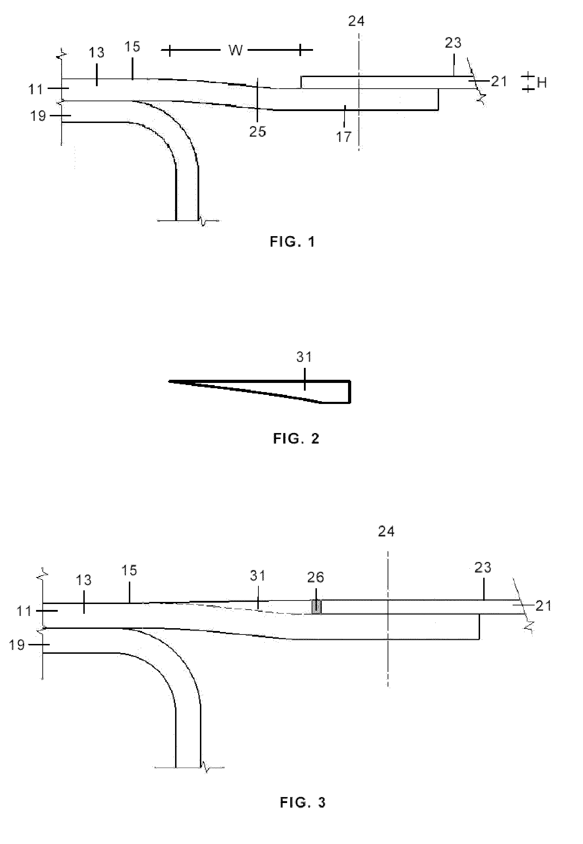

Figure 1 shows the typical interface arrangement between a wing skin 11 which extends forward the front spar 19 and a wing leading edge panel 21. The wing skin 11 is joggled so that the surface 15 of the first area 13 belongs to the wing aerodynamic contour and the second area 17 is the area where the joint with the leading edge panel 21 is carried out by means of, usually, at least one row of fasteners placed in the position indicated by the line 24. The surface 23 of the leading edge panel 21 also belongs to the wing aerodynamic contour.

This interface arrangement creates a gap 25 of width W and height H which can not be sealed satisfactorily using an aerodynamic smoothing sealant when H is bigger than 10 mm. On the other hand, said sealant raise several maintenance problems due to certain defects (particularly cracking) or to its detachment from the wing skin 21.

According to the present invention, the gap 25 is filled with an intermediate part 31, that in the preferred embodiment shown in Figures 2 and 3 is a wedge-shaped intermediate part made of composite material, that is joined to the wing skin 11 previously to its union with the leading edge panel 21.

As illustrated in Figure 3 the wedge-shaped intermediate part 31 has a suitable shape to fill the gap 25 (whose shape is determined by the geometric features of the wing skin 11) leaving a smaller gap 26 as tolerance margin for the interface with the leading edge panel 21 that is filled with an aerodynamic smoothing sealant.

In a preferred embodiment, the gap 25 filled with said intermediate part 31 has a width W comprised between 10-15 mm and a height H greater than 3 mm.

The procedure to carry out the interface arrangement of the present invention using an intermediate part 31 made of composite material comprises a first step in which the intermediate part 31 is joined to the wing skin 21, whether by a co-curing or by a co-bonding technique, a second step in which the leading edge panel 21 is joined to the wing skin 11 and, if needed, a third step in which any remaining gap 26 between the wing skin 11 and the leading edge panel 21 is filled with an aerodynamic smoothing sealant.

In another preferred embodiment the intermediate part 31 is made of a plastic material, preferably polyurethane. In this case, the intermediate part 31 is bonded to the wing skin 11 in the Final Assembly Line. As in the previous case any remaining gap 26 between the wing skin 11 and the leading edge panel 21 is filled with an aerodynamic smoothing sealant.

The maintenance needs of this union arrangement are minimum because the aerodynamic smoothing sealant is only used to seal a very small gap 26 reducing the risk of cracking, loosening or detachment to the minimum.

On the other hand this interface arrangement allows a more uniform and esthetical superficial finishing of the interface area because of the chemical union between the wing skin 11 and the intermediate part 31 particularly allowing the painting to be applied to them at the same time.

Although the present invention has been fully described in connection with preferred embodiments, it is evident that modifications may be introduced within the scope thereof, not considering this as limited by these embodiments, but by the contents of the following claims.

## Claims

1. Interface arrangement between a first component (11) and a second component (21) of an aircraft structure having an aerodynamic contour, both components being made of composite material, the first component (11) having a joggle so that it includes a first area (13) which surface (15) belongs to the aircraft aerodynamic contour and a second area (17) where the joint with the second component (21) takes place, the second component (21) having a surface (23) belonging to the aircraft aerodynamic contour, **characterized in that** an intermediate part (31) suitable shaped for maintaining the continuity of the aircraft aerodynamic contour in the interface area between said components (11, 13) as well as to fill the expected gap (25) between said components (11, 13), is joined to the first component (21).

2. Interface arrangement according to claim 1, wherein the gap (25) filled with said intermediate part (31) has a width W comprised between 10-15 mm and a height H greater than 3 mm.

3. Interface arrangement according to any of claims 1-2, wherein said intermediate part (31) is a wedge-shaped part.

4. Interface arrangement according to any of claims 1-3, wherein an aerodynamic smoothing sealant is used to fill any remaining gap (26) between said components (11, 21).

5. Interface arrangement according to any of claims 1-4, wherein said first component (11) is a skin and said second component (21) is a leading edge panel of an aircraft lifting surface.

6. Interface arrangement according to any of claims 1-4, wherein said first component (11) is a skin and said second component (21) is a trailing edge panel of an aircraft lifting surface.

7. Interface arrangement according to any of claims 1-4, wherein said first and second components (11, 21) are skin circumferential sections of an aircraft fuselage.

8. Interface arrangement according to any of claims 1-7, wherein said intermediate part (31) is made of a composite material.

9. Interface arrangement according to any of claims 1-7, wherein said intermediate part (31) is made of a plastic material

10. Interface arrangement according to claim 9, wherein said intermediate part (31) is made of polyurethane.

11. Procedure to carry out an interface arrangement according to claim 8, **characterized by** comprising steps of:
a) join the intermediate part (31) to the first component (11);
b) join the second component (21) to the first component (11);
c) fill any remaining gap (26) between said components (11, 21) with an aerodynamic smoothing sealant.

12. Procedure according to claim 11 wherein in step a) the intermediate part (31) is co-cured with the first component (11).

13. Procedure according to claim 11 wherein in step a) the intermediate part (31) is co-bonded to the first component (11).

14. Procedure to carry out an interface arrangement according to any of claims 9-10, **characterized by** comprising steps of:
a) bonding the intermediate part (31) to the first component (11) in the Final Assembly Line;
b) fill any remaining gap (26) between said components (11, 21) with an aerodynamic smoothing sealant.
